# EUROPEAN PATENT APPLICATION

(11) **EP 3 716 187 A1**
(43) Date of publication of application: **30.09.2020**
(21) Application number: 20152377.6
(22) Date of filing: 17.01.2020
(51) Int. Cl.: G06Q 30/02, G06Q 30/06

(54) **CONTENT DELIVERY SYSTEM AND CONTENT DELIVERY METHOD**

(30) Priority: 26.03.2019 JP 2019058842
(71) Applicant: Toshiba TEC Kabushiki Kaisha, Shinagawa-ku Tokyo 141-8562 (JP)
(72) Inventor: Kamamoto, Shunichiro, Shinagawa-ku, Tokyo 141-8562 (JP)
(74) Representative: Bandpay & Greuter

(57) **Abstract**

In one embodiment, a content delivery system has a distribution management server and a content server. The distribution management server has a storage device and a controller. The storage device stores distribution history information in which event information indicating an event of the commodity has been registered. When the event information indicating sales of a commodity to be specified by commodity identification data received from the content server is registered in the distribution history information, the controller permits delivery of a content by the content server.

## Description

### FIELD

Embodiments described herein relate generally to a content delivery system and a content delivery method.

### BACKGROUND

Conventionally, systems to deliver a content as a privilege of the purchase of a commodity are known. In the delivery service like this, a code symbol such as a QR code (registered trademark) is attached to the commodity. In the code symbol, delivery information for receiving delivery of the content, such as a URL (Uniform Resource Locator) indicating a storage destination of the content, is included. A customer makes a terminal which the customer oneself uses read the delivery information which the code symbol indicates, and thereby can receive delivery of the content.

The system like this makes it an object to deliver a content to a customer who has purchased a commodity. However, a code symbol attached to the commodity uniformly includes the same delivery information regardless of whether or not the commodity has been purchased. For the reason, even when a customer makes the terminal read delivery information indicated by a code symbol attached to a commodity which has not been purchased, the system might deliver a content to the terminal of the customer.

### BRIEF DESCRIPTION OF THE DRAWINGS

Fig. 1 is an explanatory diagram showing an example of a content delivery system according to an embodiment.
Fig. 2 is a block diagram showing an example of a hardware configuration of the distribution management server according to the embodiment.
Fig. 3 is an explanatory diagram showing an example of a data configuration of the distribution history information according to the embodiment.
Fig. 4 is a block diagram showing an example of a characteristic function configuration which the distribution management server according to the embodiment has.
Fig. 5 is a flow chart showing an example of a delivery determination processing which the distribution management server according to the embodiment executes.

### DETAILED DESCRIPTION

According to one embodiment, a content delivery system delivers a content to a customer who has purchased a commodity, as a purchase privilege of the commodity. The content delivery system has a distribution management server a content server. The distribution management server manages an event of the commodity in a distribution route of the commodity. The content server delivers the content to the customer, based on the event of the commodity which is managed by the distribution management server. In addition, the distribution management server has a communication interface, a storage device, and a controller. The communication interface performs communication with the content server. The storage device stores distribution history information in which event information indicating the event of the commodity has been registered. The controller receives commodity identification data capable of identifying the commodity from the content server via the communication interface. Further, the controller determines whether the event information indicating sales of the commodity to be specified by the received commodity identification data is registered in the distribution history information. Further, when having determined that the event information indicating the sales of the commodity is registered in the distribution history information, the controller permits delivery of the content by the content server.

The content delivery system may further comprise: an information processing device which reads the commodity identification data from the commodity, and transmits a registration request including the event information indicating the event in the distribution route of the commodity to be specified by the read commodity identification data to the distribution management server; wherein: the communication interface further performs communication with the information processing device; and the controller when having received the registration request via the communication interface, determines whether the information processing device which has transmitted the registration request has registration authority of the event information of the commodity to the distribution history information, and when having determined that the information processing device has the registration authority, registers the event information included in the received registration request into the distribution history information.

Preferably, the controller determines whether the controller has received the registration request from the information processing device via the communication interface, when having determined that the controller has received the registration request via the communication interface, determines whether the information processing device which has transmitted the registration request has the registration authority of the event information of the commodity to the distribution history information and when having determined that the controller has not received the registration request via the communication interface, determines whether the controller has received the commodity identification data capable of identifying the commodity from the content server via the communication interface.

Preferably, the content server transmits a which includes the commodity identification data capable of identifying the commodity and requires determination of delivery propriety of the content to the distribution management server.

Preferably, the controller, when having determined that the controller has not received the registration request via the communication interface, determines whether the controller has received the including the commodity identification data from the content server via the communication interface.

Preferably, the controller, when having determined that the controller has received the including the commodity identification data via the communication interface, determines whether the event information indicating sales of the commodity to be specified by the commodity identification data included in the is registered in the distribution history information.

Preferably, the controller, transmits a determination result indicating delivery permission of the content corresponding to the commodity to be specified by the commodity identification data to the content server via the communication interface when having determined that the event information indicating the sales of the commodity to be specified by the commodity identification data included in the is registered in the distribution history information
Preferably, the controller transmits a determination result indicating delivery non-permission of the content corresponding to the commodity to be specified by the commodity identification data to the content server via the communication interface when having determined that the event information indicating the sales of the commodity to be specified by the commodity identification data included in the is not registered in the distribution history information.

Preferably, the controller, when the event information indicating a plurality of previously set events is registered in the distribution history information, permits the delivery of the content by the content server.

Preferably, the controller, when having determined that the information processing device which has transmitted the registration request does not have the registration authority, notifies that the controller has received the event information from the information processing device which does not have the registration authority.

Preferably, the registration authority is set for each the commodity identification data.

The controller may determine whether the information processing device has the registration authority, for each the commodity identification data, and
when having determined that the information processing device which has transmitted the registration request has the registration authority set for each the commodity identification data, register the event information included in the registration request into the distribution history information.

The present invention further relates to a content delivery method of a content delivery system having a distribution management server to manage an event of a commodity in a distribution route of the commodity, and a content server to deliver a content to a customer who has purchased the commodity as a purchase privilege of the commodity, based on the event of the commodity which is managed by the distribution management server, comprising:
storing distribution history information in which event information indicating the event of the commodity has been registered in a storage device;
receiving commodity identification data capable of identifying the commodity from the content server via the communication interface;
determining whether the event information indicating sales of the commodity to be specified by the received commodity identification data is registered in the distribution history information; and
permitting, when having determined that the event information indicating the sales of the commodity is registered in the distribution history information, delivery of the content by the content server.

Hereinafter, embodiments of content delivery systems will be described in detail with reference to the drawings. In addition, an embodiment described below is an embodiment of a content delivery system, and does not limit a configuration, a specification, and so on thereof. A content delivery system of the present embodiment is a system to deliver a content to a customer who has purchased a commodity, as a purchase privilege of the commodity. In the drawings, the same symbols indicate the same or the similar portions.

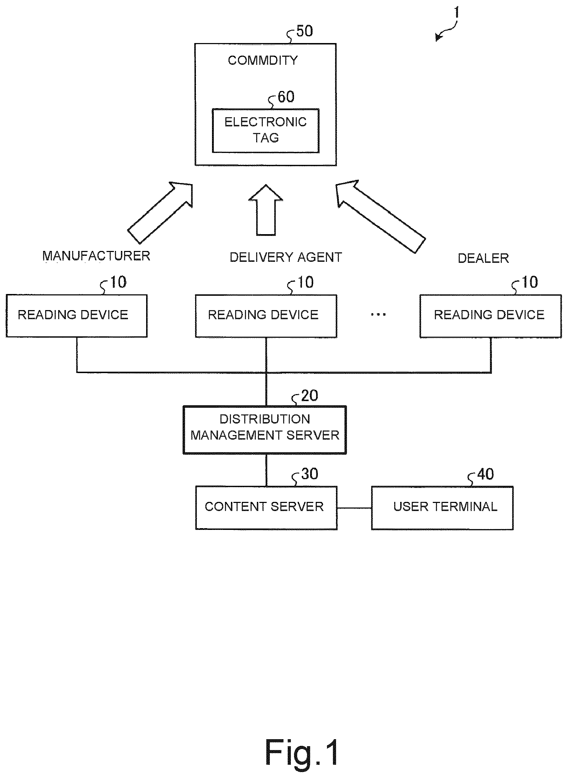

Fig. 1 shows an example of a content delivery system 1 according to an embodiment. The content delivery system 1 delivers a content, as a purchase privilege of a commodity 50, on the condition that the commodity 50 has been sold. The content delivery system 1 has reading devices 10, a distribution management server 20, a content server 30, and a user terminal 40. The reading devices 10 and the distribution management server 20 are communicatively connected via a network. In addition, the distribution management server 20 and the content server 30 are communicatively connected via a network. In addition, the content server 30 and the user terminal 40 are communicatively connected via a network. The content delivery system 1 shown in Fig. 1 has a plurality of the reading devices 10, the one distribution management server 20, the one content server 30, and the one user terminal 40. The numbers of the respective devices 10 - 40 can be changed arbitrarily.

The reading device 10 is an information processing device to read an electronic tag 60 attached to the commodity 50 by wireless communication, for example. The electronic tag 60 is a tag, such as an RF (Radio Frequency) tag. The electronic tag 60 has an IC (Integrated Circuit) chip to store information, and an antenna. The electronic tag 60 establishes communication with the reading device 10 by wireless communication, to execute reading of information stored in the IC chip and writing of information to the IC chip. When having read the information stored in the IC chip, the electronic tag 60 transmits the information stored in the IC chip to the reading device 10. For example, a commodity code that is commodity identification data capable of identifying a kind of the commodity 50, and commodity identification data capable of uniquely identifying each individual of the commodity 50, for example, is stored in the IC chip of the electronic tag 60.

In addition, the reading device 10 is installed at each distribution base of each trader related to distribution of the commodity 50. The reading device 10 receives the above-described information stored in the electronic tag 60 attached to the commodity 50 at the each distribution base, to read the above-described information. And, when having read the information from the electronic tag 60, the reading device 10 transmits event information to the distribution management server 20. Here, the event information is information indicating an event in a distribution route of the commodity 50. The event information includes tag information, position information, date and time information, and scene information. The tag information is information read from the electronic tag 60, that is, the commodity code (the commodity identification data). The position information is information indicating a position where the reading device 10 has read the tag information from the electronic tag 60. For example, the position information includes information indicating a distribution base in the distribution route, such as a factory, a warehouse, and a store. The date and time information is information indicating a date and time when the reading device 10 has read the tag information from the electronic tag 60. The scene information is information indicating a scene where the reading device 10 has read the tag information from the electronic tag 60. For example, the scene information includes information indicating arrival and shipment to and from a warehouse and so on, sales and so on of the commodity 50.

The distribution management server 20 is a server device which complies with a specification such as an EPCIS (Electronic Product Code Information Service). The distribution management server 20 manages an event of a commodity in a distribution route of the commodity. Specifically, when having received the event information from the reading device 10, the distribution management server 20 stores the tag information (the commodity code), the position information, the date and time information, and the scene information which are included in the event information in association with each other. In addition, the distribution management server 20 determines whether or not to permit delivery of a content, based on whether or not the event information indicating sales of the commodity 50 is registered.

The content server 30 is a server device to deliver the content to the customer, based on the event of the commodity which is managed by the above-described distribution management server 20. When having received a delivery request of the content from the user terminal 40, the content server 30 transmits a delivery determination request to require determination as to whether or not to permit delivery of the content, to the distribution management server 20. And, when the distribution management server 20 permits delivery of the content, with respect to the above-described delivery determination request from the content server 30, the content server 30 delivers the content to the user terminal 40.

The user terminal 40 is a terminal which the customer uses, such as a smartphone, and a tablet terminal. The user terminal 40 accepts an input of delivery information such as a URL indicating a storage destination of the content, and a commodity code. The user terminal 40 transmits the commodity code to the content server 30 specified by the URL which the delivery information indicates, to require delivery of the content.

Next, a hardware configuration of the distribution management server 20 will be described.

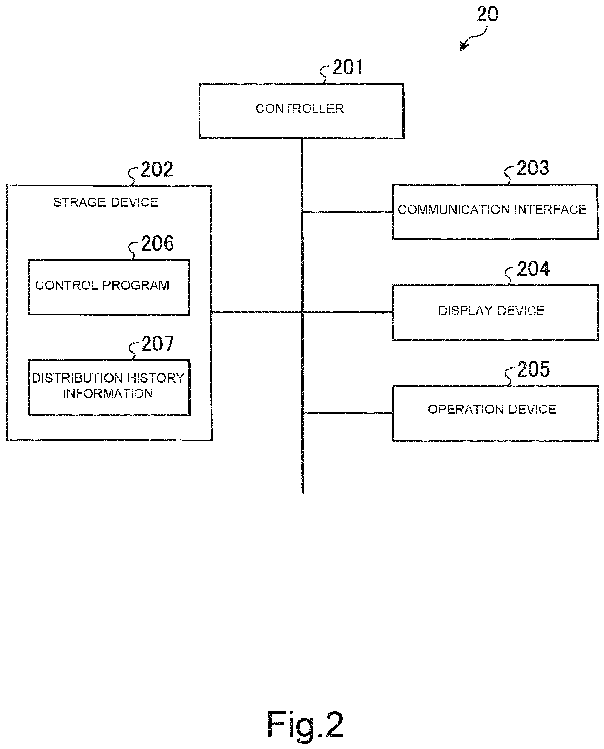

Fig. 2 shows an example of a hardware configuration of the distribution management server 20. The distribution management server 20 has a controller 201, a storage device 202, a communication interface 203, a display device 204, and an operation device 205. These respective devices 201 - 205 are connected to each other via a system bus such as a data bus, and an address bus.

The controller 201 is a computer which controls a whole operation of the distribution management server 20 to realize various functions which the distribution management server 20 has. The controller 201 has a CPU (Central Processing Unit), a ROM (Read Only Memory), and a RAM (Random Access Memory). The CPU totally controls an operation of the distribution management server 20. The ROM stores various programs and data. The RAM temporarily stores various program and various data. And, the CPU executes the program stored in the ROM, the storage device 202, or the like, using the RAM as a work area (an operation area).

The storage device 202 is a storage device, such as an HDD (Hard Disk Drive), and an SSD (Solid State Drive). The storage device 202 stores a control program 206, and distribution history information 207.

The control program 206 includes an operating system, and a program for realizing a function which the distribution management server 20 has. Specifically, the control program 206 includes a program for realizing a characteristic function pertaining to the present embodiment.

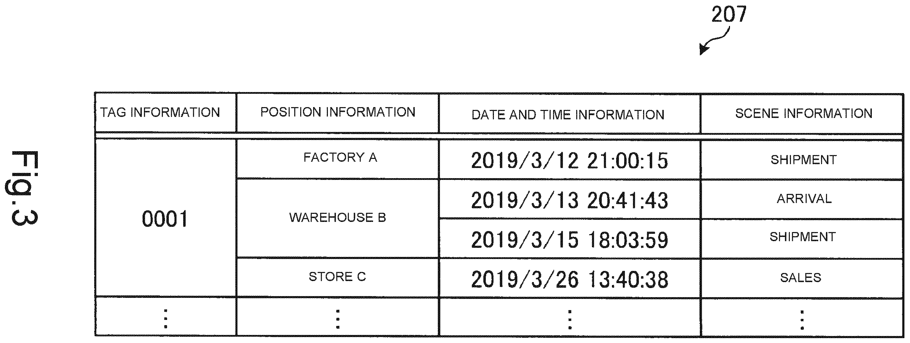

The distribution history information 207 is information in which the event information indicating the event in the distribution route of the commodity 50 to be specified by the commodity code has been registered. Here, Fig. 3 shows an example of a data configuration of the distribution history information 207 which is stored in the storage device 202. The distribution history information 207 includes the commodity code (the tag information), the position information, the date and time information, and the scene information, as the event information. In the distribution history information 207, the commodity code, the position information, the date and time information, and the scene information are associated with each other. For example, event information indicating following events 1 to 4 in the distribution route of the commodity a commodity code of which is "0001" is registered, in the distribution history information 207 shown in Fig. 3.

Event 1 That the commodity was shipped from a factory "A" in the distribution route, at a date and time of "2019/3/12 21:00:15".

Event 2That the commodity arrived at a warehouse "B" in the distribution route, at a date and time of "2019/3/13 20:41:43".

Event 3That the commodity was shipped from the warehouse "B" in the distribution route, at a date and time of "2019/3/15 18:03:59".

Event 4That the commodity was sold at a store "C" in the distribution route, at a date and time of "2019/3/26 13:40:38".

The commodity code, the position information, the date and time information, and the scene information in the distribution history information 207 are informations which have been received as the event information. That is, when having received the event information from the reading device 10, the distribution management server 20 registers the commodity code, the position information, the date and time information, and the scene information which are included in the event information in associated with each other in the distribution history information 207.

The communication interface 203 is an interface for communicating with the other devices (for example, the reading device 10, the content server 30, and so on), via the network.

The display device 204 is a display device such as a liquid crystal display, for example. When it is determined that the reading device 10 which has transmitted a registration request does not have registration authority, as described later, for example, the display device 204 notifies that the event information has been received from the reading device 10 which does not have the registration authority. The operation device 205 is an input device, such as a keyboard and a mouse, for example.

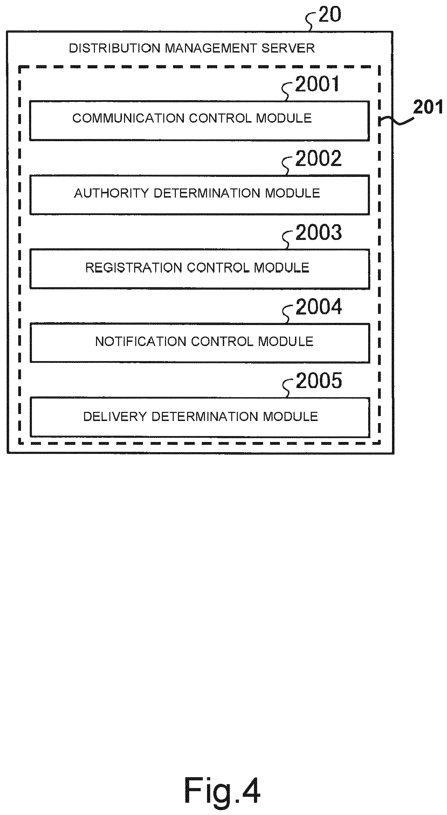

Next, a characteristic function which the distribution management server 20 has will be described. Here, Fig. 4 shows an example of a characteristic function configuration which the distribution management server 20 has.

The controller 201 of the distribution management server 20 develops the control program 206 of the storage device 202 on the RAM, and operates in accordance with the control program 206, to generate respective function modules shown in Fig. 4 on the RAM. Specifically, the controller 201 of the distribution management server 20 has a communication control module 2001, an authority determination module 2002, a registration control module 2003, a notification control module 2004, and a delivery determination module 2005, as the function modules.

The communication control module 2001 controls the communication interface 203 to execute communication with the reading device 10 and the content server 30 which are connected to the network.

For example, the communication control module 2001 receives, as a delivery determination request to require determination of delivery propriety of the content, the commodity code that is the commodity identification data capable of identifying the kind of the commodity 50, and the commodity identification data capable of uniquely identifying each individual of the commodity 50, from the content server 30, via the communication interface 203.

In addition, the communication control module 2001 transmits a determination result which has been determined in accordance with the delivery determination request, to the content server 30 via the communication interface 203. For example, the communication control module 2001 transmits a determination result indicating delivery permission of the content to the content server 30, via the communication interface 203, on the condition that the above-described event information indicating sales of the commodity 50 to be specified by the received commodity code is registered, based on the distribution history information 207 in which the event information in the distribution route of the commodity 50 to be specified by the commodity code is registered.

In addition, the communication control module 2001 receives the registration request including the event information indicating the event in the distribution route of the commodity 50 from the reading device 10, via the communication interface 203.

The authority determination module 2002 determines whether or not the reading device 10 which has transmitted the registration request has authority to register the event information indicating the event in the distribution route of the commodity 50 into the distribution history information 207. Here, a trader related to distribution of the commodity 50 is determined before the distribution. For the reason, there is a high possibility that the registration request from the reading device 10 which does not have the authority is an illegal registration request. Accordingly, the authority determination module 2002 determines whether or not the reading device 10 which has transmitted the registration request has registration authority to register the event information indicating the event of the commodity into the distribution history information 207.

For example, the authority determination module 2002 determines the presence or absence of the registration authority, based on whether or not an IP (Internet Protocol) address of the reading device 10 which has transmitted the registration request is a previously registered IP address. In addition, the authority determination module 2002 may determine the presence or absence of the registration authority, by a user code and a password which have been transmitted from the reading device 10 which has transmitted the registration request. Further, the authority determination module 2002 may determine the presence or absence of the registration authority of the reading device 10 which has transmitted the registration request, by a method other than these.

In addition, a trader related to distribution of the commodity 50 is determined for each the commodity 50. For the reason, the presence or absence of the registration authority is determined for each the commodity 50, and thereby it is possible to determine the presence or absence of the registration authority more strictly. When the registration authority is set for each the commodity code, the authority determination module 2002 determines whether the reading device 10 has the registration authority for each the commodity code included in the registration request. In addition, the authority determination module 2002 may determine the presence of absence of the registration authority before the registration request is made. In this case, when having determined that the reading device 10 has the registration authority, the authority determination module 2002 makes the registration request to be received by the communication control module 2001.

On the condition that the registration control module 2003 has received the event information indicating the event from the reading device 10 having the registration authority, the registration control module 2003 registers the event information indicating the event of the commodity into the distribution history information 207. In more detail, when the authority determination module 2002 has determined that the reading device 10 which has transmitted the registration request has the registration authority, the registration control module 2003 registers the event information included in the registration request into the distribution history information 207. That is, the registration control module 2003 registers the event information including the tag information (the commodity code), the position information, the date and time information, and the scene information into the distribution history information 207. When the registration authority is set for each commodity code, the registration control module 2003 registers the event information indicating the event of the commodity into the distribution history information 207, on the condition that the registration control module 2003 has received the event information from the reading device 10 which has the registration authority set for each the commodity code.

The notification control module 2004 notifies on the condition that the notification control module 2004 has received the event information from the reading device 10 without the registration authority. Here, the distribution management server 20 permits distribution of the content when sales of the commodity 50 is registered. For the reason, when the distribution management server 20 has received the event information from the reading device 10 without the registration authority, there is a possibility that registration of sales is illegally performed. Consequently, the notification control module 2004 notifies that the notification control module 2004 has received the event information from the reading device 10 without the registration authority. For example, the notification control module 2004 notifies by making the display device 204 display a screen showing that the notification control module 2004 has received the event information from the reading device 10 without the registration authority. In addition, without being limited to the screen display, the notification control module 2004 may notify by transmitting that the notification control module 2004 has received the event information from the reading device 10 without the registration authority to a terminal of a manager, or may notify by another method.

The delivery determination module 2005 permits delivery of the content by the content server 30, on the condition that the event information indicating sales of the commodity 50 to be specified by the commodity code which the communication control module 2001 has received is registered, based on the distribution history information 207 in which the event information indicating the event in the distribution route of the commodity 50 to be specified by the commodity code included in the delivery determination request which the communication control module 2001 has received from the content server 30 is registered. In more detail, when the event information indicating sales of the commodity 50 to be specified by the commodity code included in the delivery determination request which the communication control module 2001 has received from the content server 30 is registered in the distribution history information 207, the delivery determination module 2005 makes a determination result indicating delivery permission to be transmitted to the content server 30 by the communication control module 2001. On the other hand, when the event information indicating sales of the commodity 50 to be specified by the commodity code included in the delivery determination request which the communication control module 2001 has received from the content server 30 is not registered in the distribution history information 207, the delivery determination module 2005 makes a determination result indicating delivery non-permission to be transmitted to the content server 30 by the communication control module 2001.

In addition, the commodity 50 is sold via the predetermined distribution route. That is, when the commodity 50 is sold via the regular distribution route, not only the event information indicating sales, but the event information indicating shipment and arrival and so on from and to a factory, a warehouse and so on is registered in the distribution history information 207. Accordingly, the delivery determination module 2005 may make the delivery permission of the content to be transmitted by the communication control module 2001, on the condition that the event information indicating a plurality of the previously set events is registered in the distribution history information 207.

Specifically, the delivery determination module 2005 makes the determination result indicating the delivery permission to be transmitted to the content server 30 by the communication control module 2001, on the condition that information indicating a predetermined scene of not only "sales" but also "shipment" or "arrival" is registered in the scene information which is associated with the commodity code included in the delivery determination request. In addition, the delivery determination module 2005 may make the determination result indicating the delivery permission to be transmitted to the content server 30 by the communication control module 2001, on the condition that without being limited to the scene information, information indicating a predetermined position is registered in the position information. In addition, the delivery determination module 2005 may make the determination result indicating the delivery permission to be transmitted to the content server 30 by the communication control module 2001, on the condition that without being limited to the scene information, information indicating a predetermined date and time is registered in the date and time information. Further, the delivery determination module 2005 may make the delivery permission to be transmitted by the communication control module 2001, on the condition that predetermined information is registered in the combination of the position information, the date and time information, and the scene information.

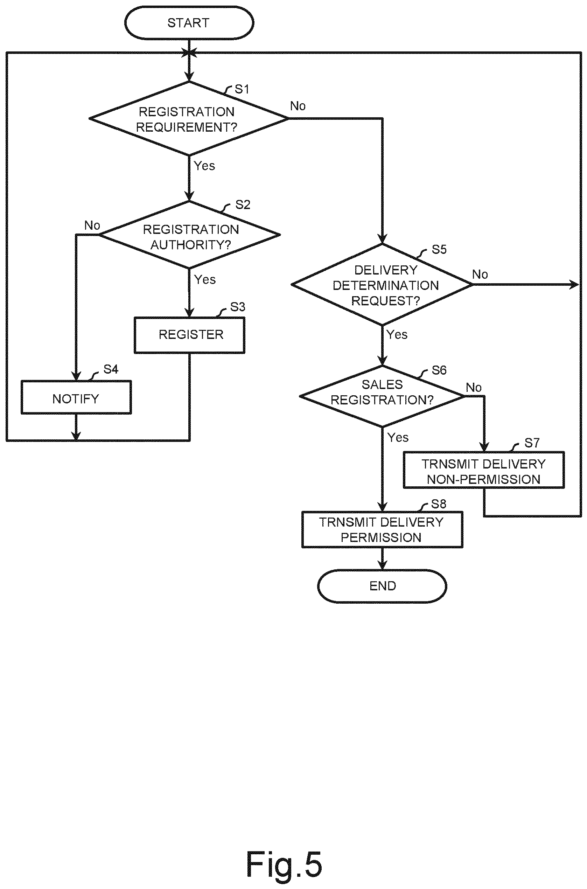

Next, a distribution determination processing which the distribution management server 20 executes will be described. Here, Fig. 5 is a flow chart showing an example of a distribution determination processing which the distribution management server 20 executes.

In a step S1 of Fig. 5, the communication control module 2001 of the controller 201 determines whether or not the communication control module 2001 has received the registration request including the event information indicating the event in the distribution route of the commodity 50 via the communication interface 203. Specifically, the communication control module 2001 determines whether or not the communication interface 203 has received the registration request.

When the communication interface 203 has received the registration request (step S1; Yes), the processing of the controller 201 proceeds to a step S2. In the step S2, the authority determination module 2002 of the controller 201 determines whether or not the reading device 10 which has transmitted the registration request has the registration authority of the event information to the distribution history information 207.

When the reading device 10 which has transmitted the registration request has the registration authority of the event information to the distribution history information 207 (step S2; Yes), the processing of the controller 201 proceeds to a step S3. In the step S3, the registration control module 2003 of the controller 201 registers the event information (the information indicating the event of the commodity) included in the registration request into the distribution history information 207. And, the processing of the controller 201 returns to the step S1.

In addition, when the reading device 10 which has transmitted the registration request does not have the registration authority of the event information to the distribution history information 207 (step S2; No), the processing of the controller 201 proceeds to a step S4. In the step S4, the notification control module 2004 of the controller 201 notifies that the event information has been received from the reading device 10 without the registration authority. And, the processing of the controller 201 returns to the step S1.

In addition, when the communication interface 203 has not received the registration request (step S1; No), the processing of the controller 201 proceeds to a step S5. In the step S5, the communication control module 2001 of the controller 201 determines whether or not the communication control module 2001 has received the delivery determination request to require determination of delivery propriety of the content via the communication interface 203. Specifically, the communication control module 2001 determines whether or not the communication interface 203 has received the delivery determination request. When the communication interface 203 has not received the delivery determination request (step S5; No), the processing of the controller 201 returns to the step S1.

In addition, when the communication interface 203 has received the delivery determination request (step S5; Yes), the processing of the controller 201 proceeds to a step S6. In the step S6, the delivery determination module 2005 of the controller 201 determines whether or not the event information indicating sales of the commodity 50 to be specified by the commodity code included in the delivery determination request is registered in the distribution history information 207.

When the event information indicating the sales of the commodity 50 is not registered in the distribution history information 207 (step S6; No), the processing of the controller 201 proceeds to a step S7. In the step S7, the communication control module 2001 of the controller 201 transmits a determination result indicating delivery non-permission of the content which is associated with the commodity 50 to the content server 30. And, the processing of the controller 201 returns to the step S1.

In addition, when the event information indicating the sales of the commodity 50 is registered in the distribution history information 207 (step S6; Yes), the processing of the controller 201 proceeds to a step S8. In the step S8, the communication control module 2001 of the controller 201 transmits a determination result indicating delivery permission of the content which is associated with the commodity 50 to the content server 30.

By the above, the controller 201 of the distribution management server 20 finishes the delivery determination processing.

As described above, the distribution management server 20 according to the present embodiment receives the commodity code that is the commodity identification data capable of identifying the kind of the commodity 50, and the commodity identification data capable of uniquely identifying each individual of the commodity 50, from the content server 30. The distribution control server 20 transmits the determination result indicating the delivery permission of the content to the content server 30, on the condition that the event information indicating the sales of the commodity 50 to be specified by the received commodity code is registered, based on the distribution history information 207 in which the event information indicating the event in the distribution route of the commodity 50 to be specified by the commodity code is registered. By this means, the content server 30 can deliver the content to the user terminal 40, on the condition that the commodity 50 of an object has been sold. That is, when the commodity 50 has not been purchased, the content server 30 does not deliver the content corresponding to the commodity 50 to the user terminal 40. Accordingly, the distribution management server 20 can prevent that the content might be acquired illegally.

In addition, in the above-described embodiment, it has been described that the distribution management server 20 stores the distribution history information 207. However, a server device other than the distribution management server 20 may store the distribution history information 207. Further, a plurality of server devices may store the distribution history information 207. For example, respective different server devices may store the tag information (the commodity code), the position information, the date and time information, and the scene information which are included in the distribution history information 207.

In addition, in the above-described embodiment, it has been described that the distribution management server 20 determines whether or not to permit the delivery of the content. However, a server device other than the distribution management server 20 may determine whether or not to permit the delivery of the content. For example, the content server 30 may determine whether or not to permit the delivery of the content. That is, the content server 30 may have the distribution determination module 2005. In this case, the content server 30 receives the commodity code that is the commodity identification data capable of identifying the kind of the commodity 50, and the commodity identification data capable of uniquely identifying each individual of the commodity 50 from the user terminal 40. The content server 30 transmits a determination request as to whether the sales of the commodity 50 to be specified by the received commodity code is registered to the distribution management server 20 and so on. And, the content server 30 permits delivery of the content, on the condition that the content server 30 has received a response indicating that the event information indicating sales of the commodity 50 is registered from the distribution management server 20 and so on. That is, the content server 30 delivers the content.

The program to be executed in each of the devices of the above-described embodiments and modifications is provided while being previously incorporated in a memory (a ROM or a storage device) which the each device has, but is not limited to this. For example, the above-described program may be provided while being recorded in a computer readable recording medium, such as a CD-ROM, a flexible disk (FD), a CD-R, a DVD (Digital Versatile Disk), in a file of an installable format or an executable format. Further, the above-described computer readable storage medium is not limited to a medium independent from a computer or an incorporated system, but includes a storage medium in which the program transmitted via a LAN, Internet or the like is downloaded and stored or temporarily stored.

In addition, the program to be executed in each of the devices of the above-described embodiments and modifications may be stored on a computer connected to a network such as Internet and provided by being downloaded via the network, or may be provided or distributed via a network such as Internet.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A content delivery system to deliver a content to a customer who has purchased a commodity, as a purchase privilege of the commodity, comprising:
a distribution management server to manage an event of the commodity in a distribution route of the commodity; and
a content server to deliver the content to the customer, based on the event of the commodity which is managed by the distribution management server;
the distribution management server having
a communication interface to perform communication with the content server,
a storage device to store distribution history information in which event information indicating the event of the commodity has been registered, and
a controller which
receives commodity identification data capable of identifying the commodity from the content server via the communication interface,
determines whether the event information indicating sales of the commodity to be specified by the received commodity identification data is registered in the distribution history information, and
when having determined that the event information indicating the sales of the commodity is registered in the distribution history information, permits delivery of the content by the content server.

2. The content delivery system according to claim 1, further comprising:
an information processing device which reads the commodity identification data from the commodity, and transmits a registration request including the event information indicating the event in the distribution route of the commodity to be specified by the read commodity identification data to the distribution management server;
wherein:
the communication interface further performs communication with the information processing device; and
the controller
when having received the registration request via the communication interface, determines whether the information processing device which has transmitted the registration request has registration authority of the event information of the commodity to the distribution history information, and
when having determined that the information processing device has the registration authority, registers the event information included in the received registration request into the distribution history information.

3. The content delivery system according to claim 2, wherein:
the controller
determines whether the controller has received the registration request from the information processing device via the communication interface,
when having determined that the controller has received the registration request via the communication interface, determines whether the information processing device which has transmitted the registration request has the registration authority of the event information of the commodity to the distribution history information, and
when having determined that the controller has not received the registration request via the communication interface, determines whether the controller has received the commodity identification data capable of identifying the commodity from the content server via the communication interface.

4. The content delivery system according to claim 3, wherein:
the content server transmits a delivery determination request which includes the commodity identification data capable of identifying the commodity and requires determination of delivery propriety of the content to the distribution management server; and
the controller, when having determined that the controller has not received the registration request via the communication interface, determines whether the controller has received the delivery determination request including the commodity identification data from the content server via the communication interface.

5. The content delivery system according to claim 4, wherein:
the controller, when having determined that the controller has received the delivery determination request including the commodity identification data via the communication interface, determines whether the event information indicating sales of the commodity to be specified by the commodity identification data included in the delivery determination request is registered in the distribution history information.

6. The content delivery system according to claim 5, wherein:
the controller
when having determined that the event information indicating the sales of the commodity to be specified by the commodity identification data included in the delivery determination request is registered in the distribution history information, transmits a determination result indicating delivery permission of the content corresponding to the commodity to be specified by the commodity identification data to the content server via the communication interface.

7. The content delivery system according to claim 5 or 6, wherein:
the controller when having determined that the event information indicating the sales of the commodity to be specified by the commodity identification data included in the delivery determination request is not registered in the distribution history information, transmits a determination result indicating delivery non-permission of the content corresponding to the commodity to be specified by the commodity identification data to the content server via the communication interface.

8. The content delivery system according to any one of claims 1 to 6, wherein:
the controller, when the event information indicating a plurality of previously set events is registered in the distribution history information, permits the delivery of the content by the content server.

9. The content delivery system according to any one of claims 2 to 8, wherein:
the controller, when having determined that the information processing device which has transmitted the registration request does not have the registration authority, notifies that the controller has received the event information from the information processing device which does not have the registration authority.

10. The content delivery system according to any one of claims 2 to 9, wherein:
the registration authority is set for each the commodity identification data; and
the controller
determines whether the information processing device has the registration authority, for each the commodity identification data, and
when having determined that the information processing device which has transmitted the registration request has the registration authority set for each the commodity identification data, registers the event information included in the registration request into the distribution history information.

11. A content delivery method of a content delivery system having a distribution management server to manage an event of a commodity in a distribution route of the commodity, and a content server to deliver a content to a customer who has purchased the commodity as a purchase privilege of the commodity, based on the event of the commodity which is managed by the distribution management server, comprising:
storing distribution history information in which event information indicating the event of the commodity has been registered in a storage device;
receiving commodity identification data capable of identifying the commodity from the content server via the communication interface;
determining whether the event information indicating sales of the commodity to be specified by the received commodity identification data is registered in the distribution history information; and
permitting, when having determined that the event information indicating the sales of the commodity is registered in the distribution history information, delivery of the content by the content server.
